# EUROPEAN PATENT APPLICATION

(11) **EP 1 139 226 A1**
(43) Date of publication of application: **04.10.2001**
(21) Application number: 01100499.1
(22) Date of filing: 09.01.2001
(51) Int. Cl.: G06F 13/40

(54) **Method of emulating an attachment and detachment of a USB device**

(30) Priority: 14.01.2000 US 482621
(71) Applicant: MICROCHIP TECHNOLOGY INC., Chandler, AZ 85224-6199 (US)
(72) Inventor: Dippenaar, Theodor J., Chandler, Arizona 85248 (US); Schieke, Peter, Phoenix, Arizona 85048 (US); Pyska, Michael S., Phoenix, Arizona 85048 (US)
(74) Representative: Patry, Didier Marcel Pierre

(57) **Abstract**

A pull-up resistor is connected to a V_{USB} pin of a USB device and either the D+ line or the D- line of a USB cable plugged into a port. The V_{USB} pin is disconnected from a voltage source under software control to float the pull-up resistor from the D+ line or the D- line such that there is no current flow through the pull-up resistor, the D+ line or the D- line. Because there is no current flow through the D+ line or the D- line, the host determines that the USB cable has been unplugged from the port and the USB device detached even though the USB cable remains physically plugged into the port. Under software control, the voltage source is connected to the V_{USB} pin, whereupon the host determines that a device has been connected and will start the enumeration process.

## Description

This invention relates generally to the Universal Serial Bus ("USB"), and more particularly to a method of emulating attachment and detachment of a USB device.

The Universal Serial Bus Specification, Revision 1.1, September 23, 1998 is the product of a consortium of companies. The document defines an industry-standard Universal Serial Bus and describes the bus attributes, the protocol definition, types of transactions, bus management, and the programming interface required to design and build systems and peripherals that are compliant with this standard.

The USB is a cable bus that supports data exchange between a host computer and a wide range of simultaneously accessible peripherals. The attached peripherals share USB bandwidth through a host-scheduled, token based protocol. The bus allows peripherals to be attached, configured, used, and detached while the host and other peripherals are in operation.

There is only one host in any USB system. The USB interface to the host computer system is referred to as the Host Controller. The Host Controller may be implemented in a combination of hardware, firmware, or software.

USB devices are one of the following: (a) Hubs, which provide additional attachment points to the USB; or (b) Functions, which provide capabilities to the system, such as an Integrated Services Digital Network ("ISDN") connection, a digital joystick, or speakers.

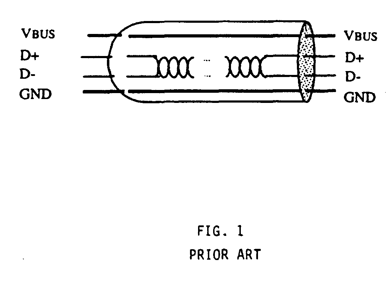

The USB transfers signal and power over a four-wire cable, as shown in FIG. 1. The signaling occurs over two wires on each point-to-point segment. Presently, there are two data rates. The USB full-speed signaling bit rate is 12 Mb/s. A limited capability low-speed signaling mode is also defined at 1.5 Mb/s. Higher data rates have been proposed.

The cable also carries V_{BUS} and ground wires on each segment to deliver power to devices. V_{BUS} is nominally +5 V at the source. The USB allows cable segments of variable lengths, up to several meters, by choosing the appropriate conductor gauge to match the specified IR drop and other attributes such as device power budget and cable flexibility. In order to provide guaranteed input voltage levels and proper termination impedance, biased terminations are used at each end of the cable. The terminations also permit the detection of attachment and detachment at each port and differentiate between full-speed and low-speed devices.

The USB supports USB devices attaching to and detaching from the USB at any time. All USB devices attach to the USB through ports on specialized USB devices known as hubs. Hubs have status indicators that indicate the attachment or detachment of a USB device on one of its ports. The host queries the hub to retrieve these indicators. In the case of an attachment, the host enables the port and addresses the USB device through the device's control pipe at the default address. The host assigns a unique USB address to the device and then determines if the newly attached USB device is a hub or a function. The host establishes its end of the control pipe for the USB device using the assigned USB address and endpoint number zero. If the attached USB device is a hub and USB devices are attached to its ports, then the above procedure is followed for each of the attached USB devices. If the attached USB device is a function, then attachment notifications will be handled by host software that is appropriate for the function.

When a USB device has been detached from one of a hub's ports, the hub disables the port and provides an indication of device removal to the host. The detached indication is then handled by appropriate USB System Software. If the detached USB device is a hub, the USB System Software must handle the removal of both the hub and all the USB devices that were previously attached to the system through the hub.

Bus enumeration is the activity that identifies and assigns unique addresses to devices attached to a bus. Because the USB allows USB devices to attach to or detach from the USB at any time, bus enumeration is an on-going activity for the USB System Software. Therefore, bus enumeration for the USB also includes the detection and processing of detachments.

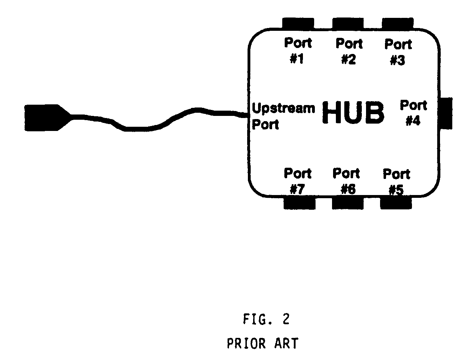

FIG. 2 illustrates a typical hub. Hubs are wiring concentrators and enable multiple attachment characteristics of the USB. Attachment points are referred to as ports. Each hub converts a single attachment point into multiple attachment points. The architecture supports concatenation of a finite number of hubs.

The upstream port of a hub connects the hub toward the host. Each of the downstream ports of a hub allows connection to another hub or function. Hubs can detect attachment and detachment at each downstream port and enable the distribution of power to downstream devices. Each downstream port can be individually enabled and attached to either full- or low-speed devices.

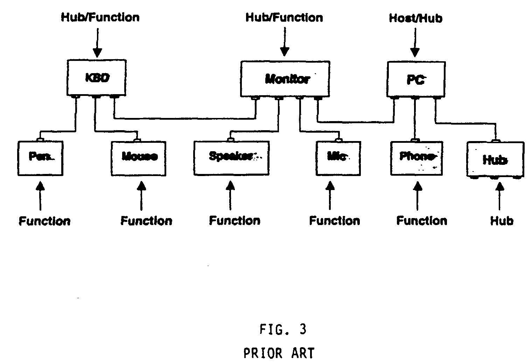

FIG. 3 illustrates how hubs provide connectivity in a typical computer environment. A function is a USB device that is able to transmit or receive data or control information over the bus. A function is typically implemented as a separate peripheral device with a cable that plugs into a port on a hub. A physical package, however, may implement multiple functions and an embedded hub with a single USB cable. This is known as a compound device. A compound device appears to the host as a hub with one or more non-removable USB devices.

Each function contains configuration information that describes its capabilities and resource requirements. Before a function can be used, it must be configured by the host. This configuration includes allocating USB bandwidth and selecting function-specific configuration options. Examples of functions include the following: (a) A locator device such as a mouse, tablet, or light pen; (b) An input device such as a keyboard; (c) An output device such as a printer; and (d) A telephony adapter such as ISDN.

The USB host interacts with USB devices through the Host Controller. The host is responsible for the following: (a) Detecting the attachment and removal of USB devices; (b) Managing control flow between the host and USB devices; (c) Managing data flow between the host and USB devices; (d) Collecting status and activity statistics; and (e) Providing power to attached USB devices.

The USB System Software on the host manages interactions between USB devices and host-based device software. There are five areas of interactions between the USB System Software and device software: (a) Device enumeration and configuration; (b) Isochronous data transfers; (c) Asynchronous data transfers; (d) Power management; and (e) Device and bus management information.

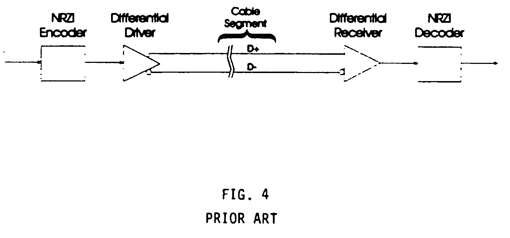

The USB employs NRZI (Non-Return to Zero, Inverted) encoding and differential signaling to transfer information across USB cables. USB serial data is NRZI encoded before being transferred, using differential signaling, across the USB cables. FIG. 4 illustrates the process of transferring information across a USB cable segment. NRZI encoding is performed first by the USB agent that is sending information. The encoded data is then driven onto the USB cable by the differential driver. The receiver translates the incoming differential data and delivers the NRZI data to the decoder.

Before transferring information to or from a given USB device, host software must first detect its presence. The USB is designed to automatically detect the presence of a device when it is attached to a USB port, as well as its removal. The mechanism employed to detect device attachment also provides a way to determine whether the device is a full-speed or low-speed device.

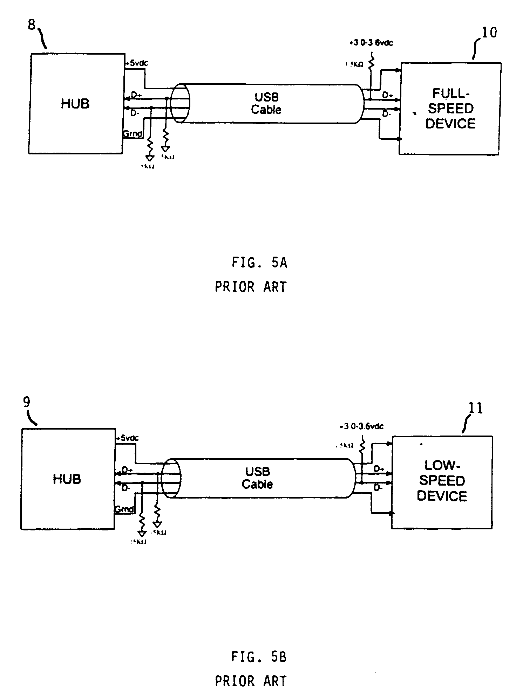

A USB hub detects that a device has been attached to one of its ports by monitoring the differential data lines, after cable power has been applied to the port. The structure illustrated in FIG. 5A includes a hub 8 and a full-speed device 10. The structure illustrated in FIG. 5B includes a hub 9 and a low-speed device 11. Referring to FIGS. 5A and 5B, when no device is attached to a USB port, 15 KΩ pull-down resistors on the D+ and D- lines ensure that both data lines are near ground. USB devices must include a pull-up resistor on either D+ or D- (depending on whether the device is a high-speed device or low-speed device, respectively). When a device is attached, current flows across the voltage divider created by the hub's pull-down resistor and the device's pull-up resistor on either the D+ line or the D- line. Since the pull-down resistor value is 15 KΩ and the device's pull-up resistor is a value of 1.5 KΩ, a data line will rise to approximately 90% of V_{USB}. When the hub (e.g., hub 8 in FIG. 5A and hub 9 in FIG. 5B) detects that one of the data lines approaches V_{USB} while the other remains near ground, it recognizes that a device (e.g., full-speed device 10 in FIG. 5A and low-speed device 11 in FIG. 5B) has been attached.

D+ and D- are differential signals. The D+ line and the D- line are the actual bus, which is where the data communication takes place. Referring to FIG. 5A, in the full-speed device 10, a 1.5 KΩ pull-up resistor is connected between V_{USB} (3.0 - 3.6 V dc) and the D+ line. Referring to FIG. 5B, in the low-speed device 11, a 1.5 KΩ resistor is connected between V_{USB} (3.0 - 3.6 V dc) and the D- line. When the appropriate circuit is in place, the host recognizes that the D+ line or the D- line has been pulled up. The host then knows that a device has been connected to that port.

When both the D+ line and the D- line fall below .8 V dc for greater than 2.5 µs the hub detects device detachment. When the D+ line or the D- line rises above 2.0 V dc for longer than 2.5 µs the hub recognizes device attachment. The device must then remain idle for greater than 2 ms. The hub sets the appropriate status bits in its port status register when detecting device attachment and resets the bit when it detects that the device has been removed. Host software polls each hub periodically to check for device attachment and detachment.

For example, when a mouse, a scanner or another exemplary USB device is plugged into the USB receptacle on the back of a personal computer ("PC"), the host senses that a new USB device has been attached. The PC does not have to reboot when the device is attached, which is an advantage of the USB. The Host Controller and the operating system recognize that a new device has been plugged into that particular port. The Host Controller then goes through the enumeration process where it begins communication with and sets up the, e.g., mouse within the system so that the operating system can receive, interpret and respond to commands that it gets from that mouse (e.g., to move the cursor). Once the mouse is plugged in, and the host PC has gone through the enumeration process, the host is not capable of performing a reset of the device. For example, if the mouse locks up, the only way to obtain a reset of the mouse, according to conventional practice, is to reboot the PC or physically unplug the cable from the PC and then plug it back in, because when the cable is plugged back into the USB socket, the host is triggered to perform the enumeration process again. The host then senses a new device which must be configured. Thus, operator intervention, such as reaching around the back of the PC, etc., is required.

In accordance with the principles of the invention, a network of devices is connected to a hub. Each of the network devices is capable of switching between a first state in which the device appears attached to the network, and a second state in which the device appears detached from the network.

In a specific embodiment of the invention, circuitry within a USB device provides for simulating attachment and detachment of the USB device. Detaching the USB device from a port is simulated by disconnecting the V_{USB} pin from a 3.3 V dc voltage source which prevents current flow through the 1.5 KΩ pull-up resistor that is connected to the V_{USB} pin and to the D+ line (or the D- line in the case of a low-speed device). When the host senses no current flow through the D+ line and the D- line, the host determines that no USB device is attached to the port, even while the USB cable from the USB device is still plugged into the port. Reconnecting the V_{USB} pin to the 3.3 V dc voltage source simulates attachment of a USB device to the port.

In another specific embodiment of the invention, a method includes the steps of connecting a pull-up resistor to a V_{USB} pin and a line of a USB cable, regulating a voltage on the V_{USB} pin, and preventing current flow through the pull-up resistor.

In another specific embodiment of the invention, an apparatus includes a USB device connectable to a port via a USB cable. The USB device is switchable between a first state and a second state. In the first state, the USB device appears to the host to be attached to the port. In the second state, the USB device appears to the host to be detached from the port.

Other aspects and advantages of the invention will become apparent from the following detailed description and accompanying drawings, illustrating by way of example the features of the invention.
FIG. 1 illustrates a USB cable;
FIG. 2 illustrates a USB hub;
FIG. 3 illustrates connectivity in a USB computer environment;
FIG. 4 illustrates transferring information across a USB cable;
FIGS. 5A and 5B illustrate resistor connections for a full-speed USB device and a low-speed USB device, respectively;
FIG. 6 illustrates a network of computers connected to a hub in accordance with the principles of the invention whereby attachment and detachment of a computer can be simulated; and
FIG. 7 illustrates a USB device which is adapted in accordance with the principles of the invention whereby attachment and detachment can be simulated.

A network is made up of independent machines, such as computers, terminals, databases, and other devices, that communicate with each other. These machines, or nodes, can operate in a peer-to-peer configuration, in which each node may initiate communication; or, in a master/slave configuration, where communication is controlled by the master. The USB network is an example of a master/slave configuration.

Under certain circumstances it is desirable for a node on a network to behave as if it is not on the network. This can be accomplished by matching or emulating the electrical and communication behavior or appearance of a node that is not present. In the case of a USB device, this simulation of a disconnected node will result in the initialization or enumeration of the node when it appears reconnected. The USB device accomplishes this by controlling the pull-up resistor load and response to network traffic.

For example, if the electronics in a USB device (such as, e.g., a mouse) were defective, and even if the electronics knew of the defective condition and knew how to correct the condition, there was no way, according to conventional practice, that it could make a request to the host to be reset or have connection reestablished; and, before this invention, unplugging the USB device (such as, e.g., a mouse) and plugging it back in was the way the USB device could be reset or have connection reestablished with the host. The invention allows an electrical version of that plugging and replugging process to be automated at the device level without requiring user interaction or special action of the host.

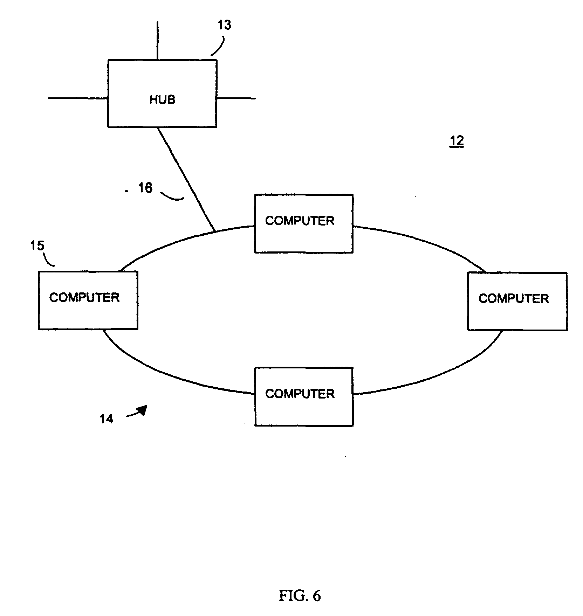

Referring to FIG. 6, an exemplary system 12 includes a hub 13 linked to a network 14 of nodes so that data can be bidirectionally distributed between the hub 13 and the network 14 of nodes. Each individual node in the network 14 includes a device such as a computer, terminal, database or peripheral. The device at each node is connectable to the network such that when connected, the device is switchable between a first state in which the device appears attached to the network, and a second state in which the device appears detached from the network.

In the specific embodiment illustrated in FIG. 6, each node includes a computer 15. A medium 16 links the nodes in the network 14, and links the network to the hub 13. The hub 13 operates to switch communications to and from the linked network 14 of nodes. A network interface card is used at the hub 13 and at each computer 15 in the network 14 to establish protocols for such communications and to route signals among the linked networks. Each computer 15 of the network 14 is able to switch between a first state in which the computer appears attached to the network 14, and a second state in which the computer appears detached from the network 14.

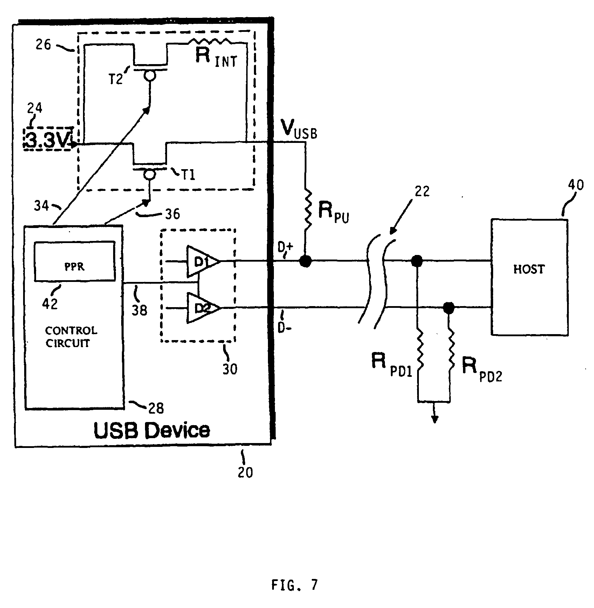

As shown in FIG. 7 for purposes of illustration, circuitry that is within a modified USB device 20 allows attachment and detachment of the USB device to be emulated under software control while the USB cable 22 from the USB device 20 remains physically inserted into the USB port. The circuitry within the USB device 20 is connected to the V_{USB} pin, the D+ line, the D- line, and ground (not shown). The pull-up resistor R_{PU} is connected between the D+ line (or the D- line depending on the speed of the USB device 20) and the V_{USB} pin. In accordance with the principles of the invention, the circuitry within the USB device 20 includes a 3.3 V dc voltage source 24, an attach-detach circuit 26 coupled to the 3.3 V dc voltage source 24, a control circuit 28 coupled to the attach-detach circuit 26, and a differential driver circuit 30 coupled to the control circuit 28.

The attach-detach circuit 26 includes a first transistor. switch T1, a second transistor switch T2, and an internal resistor R_{INT}. In the attach-detach circuit 26, there are two parallel paths between the 3.3 V dc voltage source and the V_{USB} pin. The first transistor switch T1 is located in the first path. The second transistor switch T2 and the internal resistor R_{INT} are located in the second path.

The differential driver circuit 30 includes a first buffer D1 and a second buffer D2. The outputs of the first buffer D1 and the second buffer D2 are coupled to the D+ line and the D- line, respectively. The differential driver circuit 30 drives the USB data signal onto the USB cable 22. The D1 and D2 buffers drive the D+ and D- lines, or may be tri-stated (i.e., in high-impedance state).

A SUSPEND-control signal 34 produced by the control circuit 28 is coupled to the second transistor switch T2. An ATTACH-control signal 36 produced by the control circuit 28 is coupled to the first transistor switch T1. An OUTPUT-control signal 38 produced by the control circuit 28 is coupled to the gates of the first buffer D1 and the second buffer D2.

Because the USB bus is a host-centric system, with hot-attach and -detach, the host 40 needs to be able to detect when a device is connected and disconnected from the bus. Referring to FIG. 7, a USB port without a device connected to it, will have R_{PD1} and R_{PD2} pulling down the D+ and D- lines, thereby signaling the host of this status.

In a conventional USB device, one of the data lines (either the D+ line or the D-line) is pulled up through a pull-up resistor R_{PU} to a fixed voltage V_{USB}. When such a conventional device is attached to the cable coupled to the host, the single line (either the D+ line or the D- line) with the pull-up resistor, which has a high-state voltage on the line, indicates to the host that a device is connected. When the device is removed, the host will detect this, since the rest state on the bus will again be low-state voltages on both the USB data lines (i.e., both the D+ line and the D- line).

Referring to FIG. 7, since the USB system is host-centric, the USB device only drives out onto the bus if the host has requested this. Buffer D1 and buffer D2 are disabled by the control logic or firmware in the control circuit 28 during the time when the device 20 signals its attachment by pulling up the pull-up resistor R_{PU} in accordance with the principles of the invention. Pulling up the pull-up resistor R_{PU} signals to the host 40 that a new device has been attached to the USB subsystem and thereby forces the host 40 to start the enumeration process for the newly attached device. The enumeration process re-establishes the communication interface between the host 40 and the device 20.

Before the advances provided by the invention, a cable from a USB device (such as, e.g., a mouse or a scanner) had to be removed physically from the USB port to force the re-enumeration. According to the principles of the invention, a device can be detached from the USB under software control, without the cable from the device being physically disconnected from the USB port. A USB device, augmented according to the principles of the invention, can now force the host to re-enumerate the device upon the occurrence of a situation for which the device needs to be reset by the host. The detach action is simulated by removing the pull-up voltage (V_{USB}) from the pull-up resistor R_{PU} by disabling the internal PMOS transistor switches T1 and T2 in accordance with the principles of the invention.

The control circuit 28 includes a programmable port register ("PPR") 42. Register bits of the programmable port register 42 control whether there is a 3.3 V dc voltage on the V_{USB} output pin, the presence of which indicates, to the host 40, an attached device on the USB cable. Two bits in the programmable port register 42 determine the connectivity of the regulated 3.3 V dc source onto the V_{USB} pin.

One of the two bits, the ATTACH bit, causes the logic in the control circuit 28 to select a regulated voltage onto the V_{USB}, emulating a device connected to the host. When the ATTACH bit is cleared (i.e., the ATTACH bit changes to a false condition) the control logic deselects switches T1 and T2, thereby emulating a detached device.

The USB specification also defines a suspend state for the USB device for when the bus has been inactive for a specific amount of time. After this time, the USB device 20 is supposed to enter a sleep state and consume substantially less current than in its normal operation.

An alternative mode of regulation of the voltage on the V_{USB} pin is used to limit current consumption during the suspend mode. During normal communication modes, buffer Dl will be driving data onto the data line D+ and regulation for voltage VUSB takes this into account. In suspend mode, however, the regulation requirement for V_{USB} is less, since only current through R_{PU} and R_{PD1}, need to be supplied. This reduced regulation requirement in suspend mode is selected by the SUSPEND bit. With the SUSPEND bit of the programmable port register 42 set, the control circuit 28 enables only transistor switch T2. This implements a 3.3 V dc voltage source with internal resistor R_{INT}, which supplies less current than during normal communication. During the SUSPEND mode of operation, an attached USB device is still emulated. The control circuit 28 deselects the SUSPEND-control signal 34 and selects the ATTACH-control signal 36 to exit the suspend mode whereupon full regulation on the V_{USB} pin is resumed.

While a particular form of the invention has been illustrated and described, it will also be apparent that various modifications can be made without departing from the spirit and scope of the invention.

## Claims

1. An apparatus, comprising:
a device connectable to a network, which when connected is switchable between a first state in which said device appears attached to said network, and a second state in which said device appears detached from said network.

2. The apparatus of claim 1, wherein:
said device is a USB device.

3. An apparatus, comprising:
a network of nodes linked to a hub; and
a device at each node;
wherein at least one device is able to switch between a first state in which said at least one device appears attached to said network, and a second state in which said at least one device appears detached from said network.

4. The apparatus of claim 3, wherein:
said network of nodes operates in a master/slave configuration.

5. A method, comprising the steps of:
connecting a pull-up resistor to a V_{USB} pin and a line of a USB cable;
regulating a voltage on said V_{USB} pin; and
regulating current flow through said pull-up resistor.

6. The method of claim 5, further comprising the steps of
switching off said voltage to said V_{USB} pin; and
preventing current flow through said pull-up resistor.

7. The method of claim 5, further comprising the step of
switching on said voltage to said V_{USB} pin.

8. The method of claim 5, further comprising the step of connecting said USB cable to a port.

9. The method of claim 8, wherein:
a host coupled to said port determines that a USB device is attached to said port based on said voltage.

10. The method of claim 8, wherein:
a host coupled to said port determines that a USB device is detached from said port based on said voltage.

11. An apparatus, comprising:
a USB device connectable to a port via a USB cable;
said USB device is switchable between a first state and a second state;
in said first state, said USB device appears to a host as attached to said port; and
in said second state, said USB device appears to said host as detached from said port.

12. The apparatus of claim 11, further comprising:
a V_{USB} pin of said USB device; and
a pull-up resistor which is connected to said V_{USB} pin and a line of said USB cable.

13. The apparatus of claim 12, further comprising:
an attach-detach circuit within said USB device which regulates a voltage on said V_{USB} pin;
said attach-detach circuit is coupled to a voltage source.

14. The apparatus of claim 13, further comprising:
a control circuit within said USB device which produces a control signal.

15. The apparatus of claim 14, further comprising:
a switch within said attach-detach circuit, said switch is connected between said voltage source and said V_{USB} pin, and is in one of an open state and a closed state.

16. The apparatus of claim 15, wherein:
said switch disconnects said V_{USB} pin from said voltage source responsive to said control signal.

17. The apparatus of claim 16, wherein:
current flow through said pull-up resistor is prevented when said switch is in said open state.
